# EUROPEAN PATENT APPLICATION

(11) **EP 0 594 375 A2**
(43) Date of publication of application: **27.04.1994**
(21) Application number: 93308254.7
(22) Date of filing: 15.10.1993
(51) Int. Cl.: H01Q 7/00

(54) **Translucent article having induction loop antenna**

(30) Priority: 22.10.1992 GB 9222213; 20.08.1993 GB 9317374
(71) Applicant: PILKINGTON GLASS LIMITED, St. Helens, Merseyside WA10 3TT (GB); BARCLAYS BANK PLC, London EC3P 3AH (GB)
(72) Inventor: Evason, John, Merseyside PR9 8TS (GB); Hadland, Anthony John, Coventry CV7 7DM (GB); Day, Stephen Roland, Greater Manchester WN6 9JD (GB)
(74) Representative: Jenkins, Peter David

(57) **Abstract**

A translucent article comprising a translucent substrate and at least two electrically conductive loops supported by the substrate, the loops being relatively oriented and shaped whereby when electric current is passed through the loops a magnetic field is generated which is capable of being detected by a hearing aid. The article may comprise a window, such as a window for use in a booth for a teller position. There is also provided an apparatus for generating a magnetic field for reception by a hearing aid comprising such a window and a driving circuit for supplying an electric current at a selected frequency to the at least two loops.

## Description

The present invention relates to a translucent article having an induction loop antenna and in particular to a window carrying an induction loop antenna.

It is known for hearing aids to be commonly designed with an integral receiver which is adapted to pick up magnetic fields. Historically, such receivers were intended to pick up stray magnetic fields from telephone handsets in order to provide the wearer of the hearing aid with an amplified sound signal from the telephone. In order to assist people with hearing difficulties who wear hearing aids, it is known to employ a wire loop in a building to which the public have access, for example banks, post offices, receptions etc.. The wire loop generates signals which are received by the integral receiver in the hearing aid. Typically, wire loops are disposed around rooms and smaller loops are placed under reception or teller booth counters. Known systems in receptions which employ booth counters suffer from the disadvantage of cross-talk which occurs between adjacent counter positions and there is a lack of security due to the generated signal being propogated in all directions. Thus there is a problem of interference between generating systems on adjacent booths and a lack of privacy at the booth because the fields are not sufficiently well confined to the location of the booth. This is a particular problem when such systems are incorporated into bank teller booths where obviously security and privacy are imporant. It is generally not practicable to screen magnetic fields at frequencies in the audio range since such shields are required to be thick and cumbersome. The present invention aims at least partially to overome the above-specified problems of the known hearing aid signal generation systems.

Accordingly, the present invention provides a translucent article comprising a translucent substrate and at least two electrically conductive loops supported by the substrate, the loops being relatively oriented and shaped whereby when electric current is passed through the loops a magnetic field is generated which is capable of being detected by a hearing aid.

Embodiments of the present invention will now be described by way of example only with reference to the accompanying drawings, in which:-
FIG. 1 is a schematic perspective diagram of a window carrying an induction loop antenna in accordance with a first embodiment of the present invention;
FIG. 2 is a schematic perspective diagram of a window carrying an induction loop antenna in accordance with a second embodiment of the present invention;
FIG. 3 is a schematic perspective diagram of a window carrying an induction loop antenna in accordance with a third embodiment of the present invention;
FIGS. 4(a),(b) and (c) show schematic representations of alternative constructions of induction loops in the induction loop antenna for windows in accordance with the present invention;
FIG. 5 is a graph showing a computer simulation of the vertical magnetic field strength varying with distance from the window surface at the height of the centre of the induction loop antenna shown in Figures 1, 2 and 3; and
FIGS. 6 to 8 are graphs showing the variation of the vertical magnetic field strength with distance from the window, vertical displacement; and lateral displacement respectively.

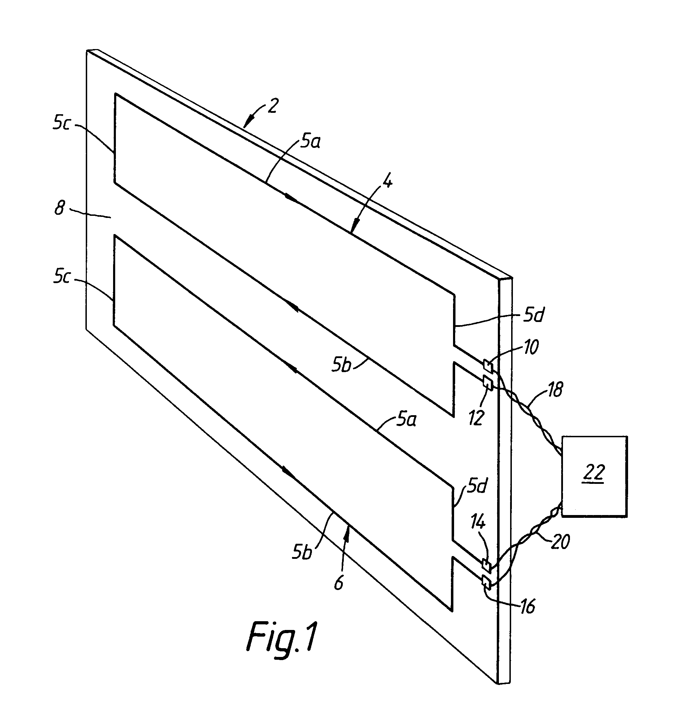

Referring to Figure 1, there is shown a window 2 carrying a pair of spaced electrically conductive loops 4,6 forming a magnetic induction loop antenna which are formed of electrically conductive material and are disposed one above the other on a surface 8 of the window2. Each loop 4,6 is in substantially rectangular form, being constituted by upper and lower horizontal portions 5a,5b and opposed vertical portions 5c,5d. The length of the portions is chosen so as to be many times smaller than the wavelength of the magnetic field to be generated in the audio frequency range. Typically, the dimensions of each loop are around 1/100,000th of the wavelength in the audio frequency range.

The dimensions of each loop are selected so that the area of each loop is sufficiently large whereby when the loop is excited with an electrical current in the audio frequency range the loops each generate a near magnetic field which does not rapidly vary in field strength in the vicinity of the centre of the multi-loop structure. Preferably, the minimum area of each loop is around 200 cm², with typical minimum dimensions for a rectangular loop being 15 cm x 15 cm. In a preferred configuration the horizontal portions 5a,5b are 40 cm long and the vertical portions 5c,5d are 20 cm long and the two loops are spaced vertically by 20 cm. However, the horizontal portions 5a,5b may be up to about 80 cm long.

Each loop 4,6 has at a respective vertical edge thereof a pair of electrical connectors 10,12 and 14,16, respectively, which are connected by respective pairs of wires 18,20 to a drive circuit 22. The window 2 is intended to be mounted at a booth position of a teller counter e.g. in a bank and typically the upper loop 4 is above the hearing position of a normal user and the lower loop 6 is below that position. The drive circuit 22 is adapted to supply to the loops 4,6 identical current signals which are passed around the two loops 4,6 with opposite hands of rotation shown by the arrows on Figure 1 so as inductively to generate the magnetic field. This two loop pattern on the window 2 provides the advantage that a substantially vertical magnetic field is generated at the position of the user, the vertical direction currently being the most sensitive direction of known hearing aids. In addition, the loop pattern has the advantage that at large distances from the window, the magnetic fields of the two loops cancel each other out to a substantial degree and this helps to confine the magnetic field effect to the vicinity of the window 2.

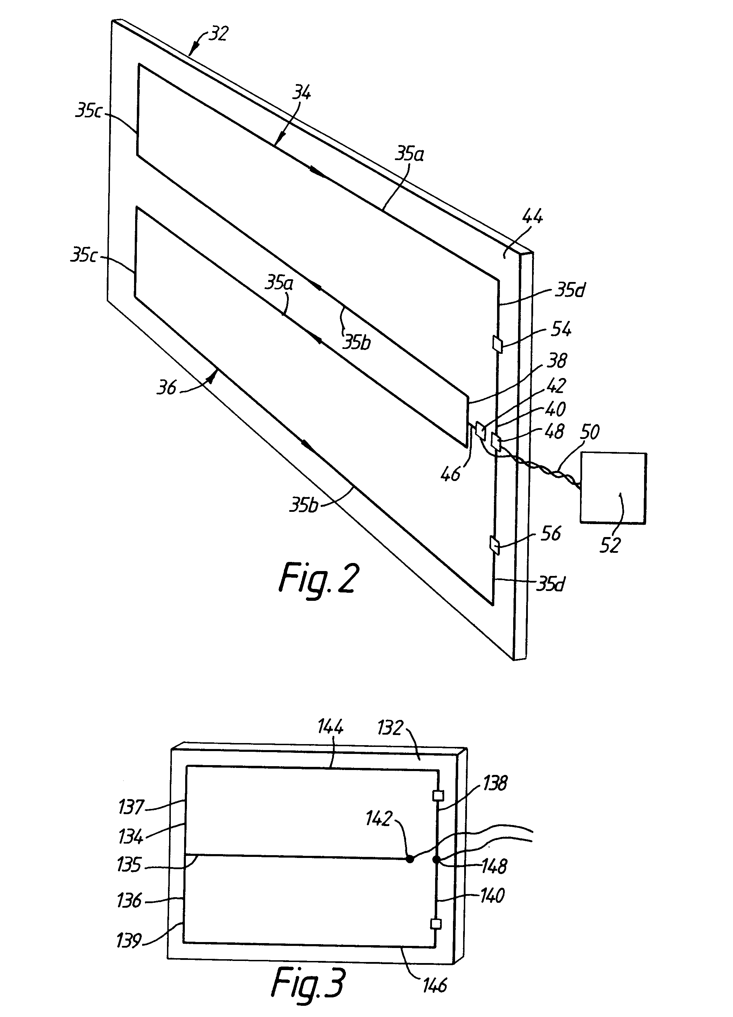

Figure 2 illustrates a second embodiment of the present invention in which a window 32, which may have the same construction as window 2 of the embodiment of Figure 1, carries a pair of conducting loops 34,36 which may be formed in the same mann- ner as the loops 4,6 of Figure 1. In the second embodiment, the loops 34,36 are again substantially rectangular but are connected together at a vertical edge of the window by a pair of vertical loop portions 38,40. Each loop 34,36 is in substantially rectangular form, being constituted by upper and lower horizontal portions 35a,35b and opposed vertical portions 35c,35d. In a preferred configuration the horizontal portions 35a,35b are 40 cm long and the vertical portions 35c,35d are 20 cm long and the two loops are spaced vertically by 20 cm. Aconnector42 is disposed on the glass surface 44 between the portions 38,40 and is connected to the inwardly located portion 38 by a horizontal extension 46. Asecond connector48 is located on the outwardly directed vertical portion 40. A pair of wires 50 connects the connectors 42,48 to a drive circuit 52. Thus the two loops 34,36 are connected to the drive circuit 52 by a common pair of connectors 42,48. Each loop 34,36 has disposed therein a respective resistor 54,56 which divides the current which is supplied from the drive circuit 52 to the loops 34,36 equally between the two loops 34,36. However, when the loops 34,36 themselves have an inherent resistance, for example greater than 1/10 ohms, so that the applied current can be equalised between the two loops 34,36, the resistors 54,56 can be omitted. Typically, the impedance of each loop, including any added resistor, is around 5 ohms in total, together with a very small inductance impedance due to the establishment of near magnetic fields. As is shown in Figure 2, the current is driven around the two loops 34,36 in opposite rotational directions as in the embodiment of Figure 1.

In Figure 2 the resistors 54,56 have the same resistance and thus are adapted to divide the current equally between the two loops. However, in accordance with the present invention, networks of other electronic components may be employed which divide the current from the drive circuit to the loops in equal or unequal portions with the components being located on or off the window surface. Such electrical components may also be adapted to vary the ratio of the current between the two loops as a function of the frequency of the signal which is supplied from the drive circuit. In the embodiments of Figures 1 and 2, the connectors which are present on the glass surface are conductive areas formed thereon which enable connection of the loops formed on or in the glass to the wires connecting to the drive circuit. In accordance with the invention, the connectors may incorporate capacitors which may be formed by conductive areas on opposed sides of at least one dielectric layer which is formed on or in the window. However, such capacitors are not particularly practical for antenna which are intended to generate signals to be received by a hearing aid because they have high impedance. Such capacitors may be part of the loop circuit, either on or off the window. Although such capacitors provide a physical break in the conductive circuit, electrical conduction is not broken at the operating frequency of the loop when the loop is driven in audio frequency range for generation of a magnetic field to be detected by a hearing aid.

A third embodiment of the present invention is shown in Figure 3. This embodiment is similar to that of Figure 2 in that it comprises two loops 134,136 which are connected together. However, instead, of having separate inner horizontal portions 35a,35bof the two loops as in the embodiment of Figure 2, in the embodiment of Figure 3 the two loops 134,136 have a common horizontal loop portion 135 which is located at the centre of the loop structure which is disposed in the window 132. The upper loop 134 and the lower loop 136 each have two vertical portions 137,138 and 139,140 which connect with the common loop portion 135. The upper loop 134 has an upper horizontal portion 144 and the lower loop 136 has a lower horizontal portion 146. A pair of connectors 142,148 are provided for connecting the loops 134,136 to a driving circuit (not shown). The connector 142 is located at the free end of common horizontal portion 135 and the connector 148 is located at the central junction of the two vertical loop portions 138,140.

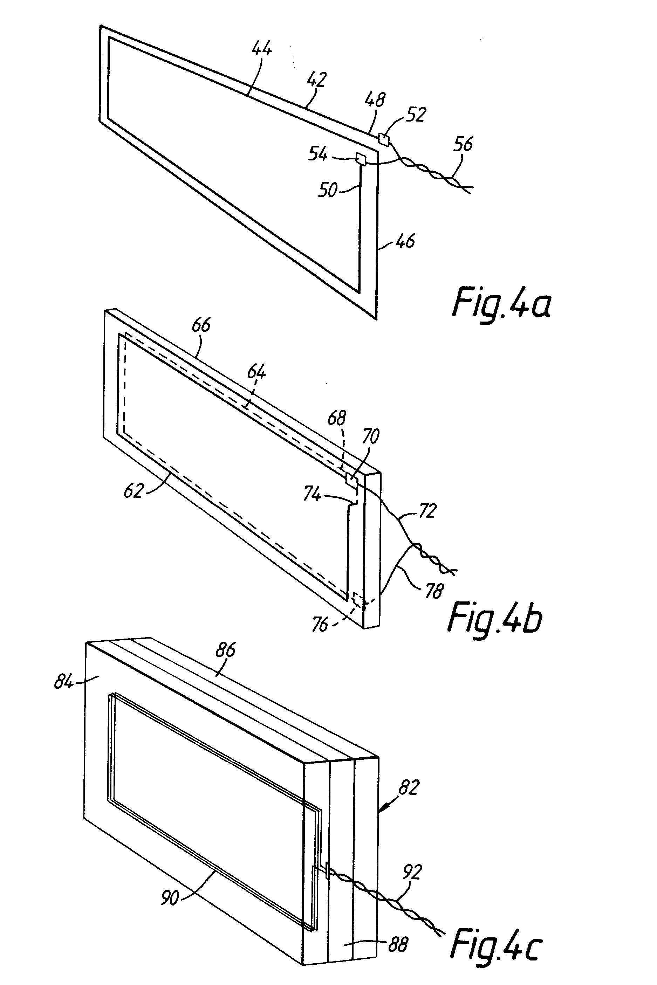

The magnetic field which is generated by each loop of conductive material in or on the window can be considerably increased by using multiple turn loops. The multiple turns may be located in a common plane so that the turns are arranged one within another. Such an arrangement is illustrated in Figure 4(a) in which a pair of turns 42,44 is located one within another and is formed by a spiraling conductor 46. As in the embodiments of Figures 1 to 3, the turns 42,44 are rectangular. At the ends 48,50 of the conductor46 are disposed connectors 52,54 to which a pairof wires 56 is connected. The wires 56 connect the turns 42,44 to a drive circuit (not shown). Figure 4(b) shows a multiple turn loop embodiment in which a pair of turns 62,64 is formed in an adjacent configuration so that the turns 62,64 are in different respective parallel planes in or on the window structure 66. The turn 62 is a substantially rectangular turn which is formed in the manner described above on the surface of a window substrate. Afree end 68 of the turn 62 is provided with a connector 70 to which a wire 72 is connected. Adjacent the connector 70 is provided a connection portion 74 which extends through the material of the window structure 66 and connects one end of the turn 62 to one end of the turn 64 which is formed in a different plane from the turn 62. The other end of the turn 64 is provided with a connector 76 which has a wire 78 connected thereto. The wires 72,78 connect the turns 62,64 to a drive circuit (not shown). Figure 4(c) shows a further multiple turn loop structure in accordance with the present invention. In this embodiment, the window structure 82 consists of a laminate composed of glass or plastics sheets 84,86 which are separated from each other and adhered together by an interlayer 88 of, for example, polyvinyl butyral. A loop structure 90 is disposed in the interlayer 88 and is formed of a plurality of turns 92 of electrical conductors 94 which have a surrounding insulating layer so that adjacent turns 92 do not electrically short each other. The ends of the multiple loop structure 90 are connected via connectors to a pair of wires 96 which connect to a drive circuit (not shown).

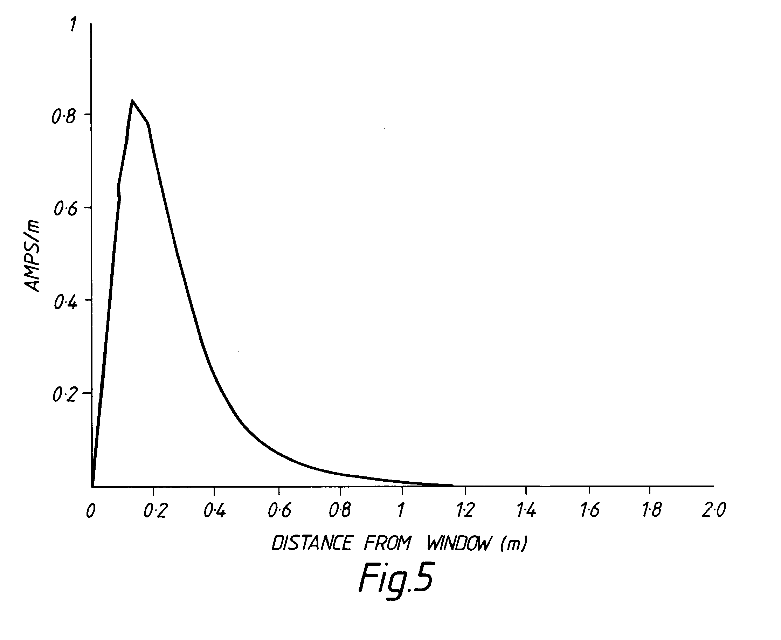

Figure 5 is a computer simulation of the vertical magnetic field strength at different distances from the window surface at the height of the centre of the loop patterns of the embodiments of Figures 1 and 2. It will be seen that the magnetic field strength rapidly increases away from the window surface to a maximum value at approximately 20 cm away from the window surface and then rapidly decreases at greater distances away from the window surface. The field generated is substantially negligible about 1 metre or more away from the surface. Thus it will be seen that the windows of Figures 1 and 2 carrying the loops thereon are particularly good for communicating signals to a hearing aid of a user at a range of about 20 cm without the generation of significant magnetic fields at longer ranges. In addition, the magnetic field is generated in front of that part of the window carrying the loops and substantially at the region where the loops are adjacent each other, and is not generated to a substantial degree towards the sides of the window. Although Figure 5 shows that the composite magnetic field resulting from the shape and relative orientation of the loops has a maximum field strength at a location which is spaced from the substrate, the loops can be arranged as in Figure 3 so that the maximum field strength occurs substantially at the glass surface and the field strength decays away therefrom.

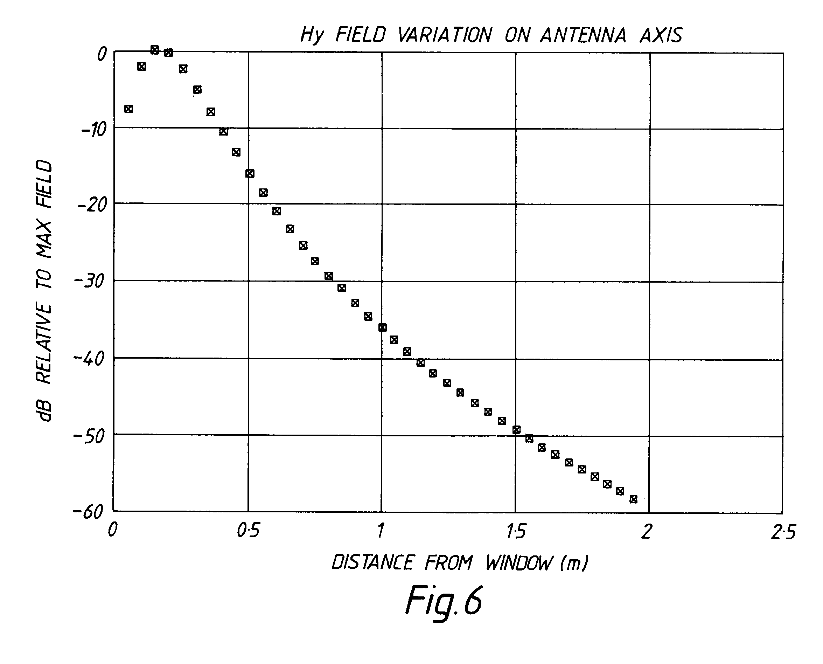

Figure 6 is a graph showing the variation of the vertical magnetic field with respect to distance from the window for an antenna having the general structure illustrated in Figure 1 in which each loop is 80 cm wide and 20 cm high and the two loops are spaced vertically by 20 cm, whereby the centres of the two loops are separated by a distance of 40 cm. In Figure 6, the origin is the centre point of the multi-loop antenna structure. It will be seen from Figure 6 that the separation of the two loops has the desirable effect of producing a field maximum at a distance from the glass. The field level is reasonably constant in the vicinity of the maximum and so small movements in the position of the user will not cause undue volume changes. In accordance with the preferred embodiment, the magnetic field which is generated has a peak at a range of about 20 cm from the glass, which is a typical distance suitable for bank counter use.

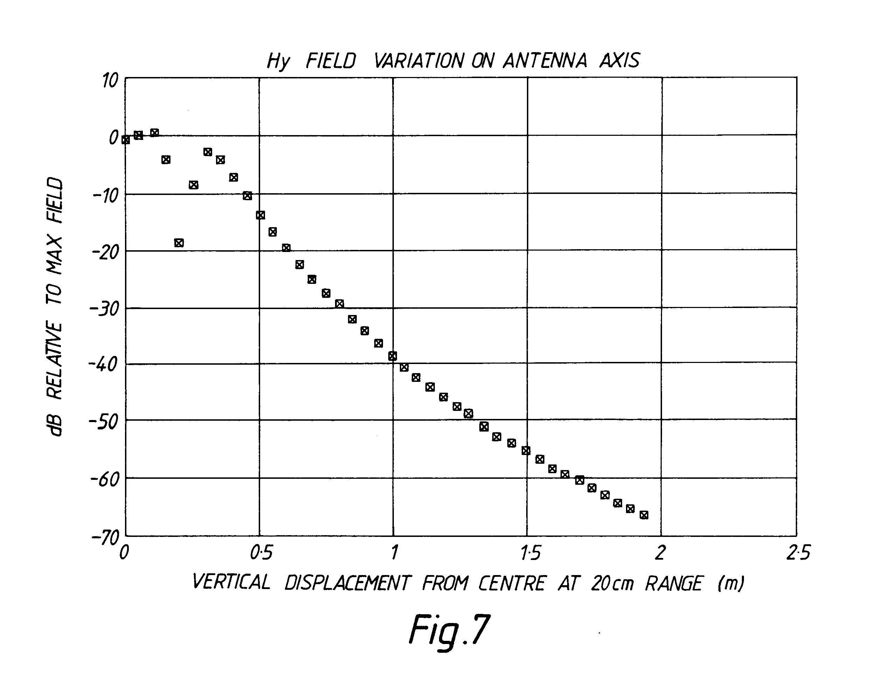

Figure 7 shows the vertical magnetic field with respect to variations in height from the centre of the antenna, the origin of the glass being at a range of 20 cm from the window. If the user's hearing aid is correctly aligned so as to sense vertical magnetic fields, then "null" points will exist at heights close to the centre lines of the two loops. Such a null can be seen in Figure 7. A user whose ear heights corresponds to one of the centre line height may need to move slightly closer to or away from or sl ig htly up or down relative to the window so as to increase the magnetic field strength. Alternatively, the user may have to tilt their head so that fields other than the pure vertical field component are sensed. Any user who is significantly taller than the top loop centre line or shorter than the lower loop centre line will receive vertical magnetic signals of strength similar to those of users of average height in the preferred configuration. It will be seen from Figure 7 that signals within 10dB of the maximum exist out to heights of around +/- 40 cm of the antenna centre. In order to minimise the null point difficulties, the preferred antenna is designed with a vertical spacing between the centre of the two loops which will accommodate the majority of users, such spacing being around 40 cm.

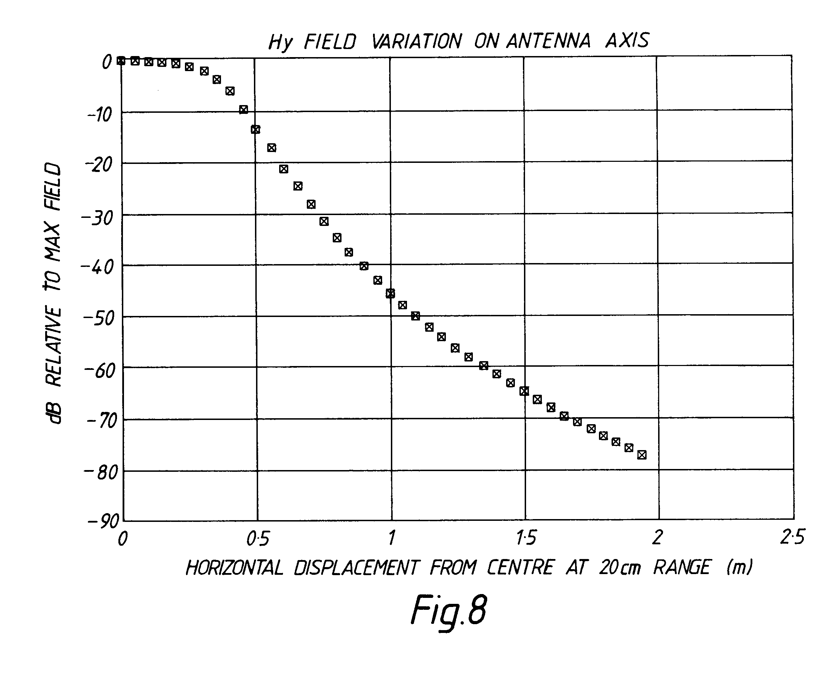

Figure 8 shows the relationship between the vertical magnetic field with respect to lateral horizontal movement from the centre of the antenna, the origin being at a range of 20 cm from the window. Laterally, across the antenna, the loops should be long enough to accommodate one and possibly two users being able to detect signals from the antenna. The magnetic fields do tend to overflow outside the loop area and so the minimum lateral width of the loop should be the lateral width which a user's hearing aid is likely to occupy minus a small distance of say about 20 cm. When the window is used as a booth position, if there are going to be adjacent booth positions, the laternal spacing between the loops of both the booth and the next booth should be at least about 50 to 70 cm otherwise exessive cross-talk between the booth positions may occur. Figure 8 clearly shows the fall off in the signal from the antenna with lateral movement. The antenna of Figure 8 has the same structure as described above with reference to Figure 6.

In each of the embodiments the window may be composed of a single sheet of glass or plastics or alternatively may be composed of a laminate of several transluscent, transparent or semi-transparent layers of glass or plastics material which may be bonded together by interlayers of plastics material e.g. polyvinyl butyral. The window may incorporate gas layers such as those employed in conventional double glazing constructions. In one particularly preferred embodiment, the conductive loop structure is carried on a transparent plastics film e.g. of polyester, which is self-adhesive on one face thereof and can be adhered by the self-adhesive surface to the existing window structure. This is an inexpensive and convenient manner of incorporating the loop assembly of the present invention into a window structure. Such plastics films are known generally in the glazing art and are typically used for enhancing the impact and spall resistance of a glass window. Atypical safety window film is a polyethylene-terephthalate polyester film coated with a functional water-activated detackified acrylate adhesive. Such films may have a thickness of from 0.05 to 0.15 mm and may also incorporate sputtered metal or metal oxide films which are applied to provide solar control or privacy. Suitable plastics films are sold by the 3M United Kingdom UK of Brack- nell Berkshire, UK under the trade names "Scotch- shield" and "Scotchtint" and by Courtaulds Performance Films UK of Fareham, Hampshire, UK under the trade name "LLUMAR".

The loops are typically located close to the likely position of the hearing aid of a user. The loops may be located at eye level height when the window is intended to be part of a counter construction and such a construction is suitable for users having hearing aids located behind the ear. The loops may however be located at other heights or positions in order to be suitable for users who may be sitting at the window.

The loops may be disposed on the external surface of a single sheet window or alternatively when the window is composed of a laminate, the loops may be disposed on internal or external surfaces of a sheet of the laminate. In one particularly preferred construction, the window 2 comprises a laminated window structure having a pair of glass sheets laminated and adhered together by an interlayer of polyvinyl butyral. Fine wires to form the loops are embedded into or adhered or attached onto the surface of the polyvinyl butyral which is then employed to laminate two glass sheets together. The loops 4,6 may be constituted by electrically conductive strips or wires or by a strip having a conductive filament, the loop being adhered to or trapped against any surface of the window. Alternatively, a conductive wire may be embedded into a sheet material of a window. The loops may also be composed of a cured and fired frit, conductive ink, resin or adhesive which has been applied onto a surface of the window and then cured and fired by known methods. The conductive inks typically are composed of metallic particles, glass particles and an organic binder and after the ink has been fired onto a glass surface a conductive track is formed on the glass surface. The loops may also be formed by applying a conductive coating to a surface of the window and then chemically or mechanically etching the film or coating to leave a conductive loop. Such coatings may also be selectively deposited to form a conductive loop. Such coatings may be transparent or semi-transparent to optical light. When the loops are carried on a self-adhesive transparent plastics film, the loops may be composed of a conductive inkwhich has been printed onto the film or wires which have been applied to the film. Such an ink may comprise a one or two pack epoxy ink loaded with silver particles to provide the required electrical conductivity and suitable conductive inks are available in commerce from Johnson Mathey PLC of Royston, Herts, U.K.

The loop may have a suitable thickness or width depending on the particular application to which the invention is being put. Largerwidths, thicknesses and cross-sectional areas of conductive loops have lower electrical resistance and thus lower electrical power loss but in contrast it may be desired that the conductors of the loops be as thin as possible in order to minimize visual obstruction by the loops. The present invention envisages the use of black or other coloured coatings, films or ink on the window in order to enhance the visual appearance of the window or to reduce the visual impact of the loops.

The passing of electrical currents through the loops creates magnetic fields which are detected by a hearing aid. The electrical currents from the drive circuit typically have values of from 10 m Ato 1.0 Aand are at audio frequencies typically of from 50 Hz to 20 kHz, more preferably from 100 Hz to 5 kHz which is the frequency range specified for audio-frequency induction loops for hearing aid purposes under the International Electrotechnical Commission (Publication 118-4) which typically create magnetic fields of around 0.05 to 0.2 A/m, more preferably about 0.1 A/m.

A man skilled in the art will appreciate that what is common to the illustrated embodiments is the use of a loop pattern on or in a transparent substrate which may form a window and that a variety different of loops may be employed in accordance with the present invention. It is merely necessary that the inductive loop, optionally together with conductors which may be off the window, enclose a finite area. The size and dimensions of suitable loops may be varied as required. The loop patterns can be modified to give a desired field distribution and the loops may be fed with currents having specific phase relationships.

In preferred embodiments of the invention amplitude controls may be incorporated into the drive circuit in order for the performance of the antenna to be adjusted as required. For example, an amplitude control could be comprised of one or more variable resistor(s) disposed in the loop(s). Such control devices may be mounted either on the window or at a convenient remote location. In addition, amplifiers, sensors, speakers, control devices, batteries or solar cells may be mounted onto or laminated into the window structure in order to provide, control or power the signal which is fed to the loop or loops. Such components may be connected to the loops by conductive wires or tracks which are added to the window structure.

In further embodiments, microphones and/or speakers could be integrated with the antenna system disclosed hereinabove so as to provide a composite speech transmission system for both users having normal hearing and users being hard of hearing. Thus the drive circuit could be incorporated into an amplifier system to which is connected conventional microphones and loudspeakers. With such a system located on a window of a bank teller booth for example, information can be conveyed to and from both sides of the window to persons who have normal hearing and who are hard of hearing.

In the illustrated embodiments, the drive circuit is directly connected electrically to the loops. However, in accordance with further embodiments of the invention, signals may be coupled onto the window or between surfaces of the window by inductive means. In these embodiments, single or multiple turn driving inductive loops could be located in the vicinity of the loops shown in the illustrated embodiments, the driving inductive loops being in different planes relative to the illustrated loops but with a common axis. Alternatively, the driving inductive loops may comprise single or mulitple turn loops of smaller radius than the illustrated loops, the inductive loops being electrically in series with the illustrated loops and located spaced from the illustrated loops, for example in a corner of the window, so as to be less visible to the user.

In accordance with the invention preferred embodiments of the invention the loop pattern on the window is adapted to transmit to the wearer of a receiving device in a hearing aid a signal in the form of a magnetic field, the signal transmitting information to the wearer e.g. in the form of speech of a person behind the window. In the most preferred it is intended for the physical protection or security of a cashier or employee dealing with the public. For example, the window may be incorporated into a booth for a teller position of a building e.g. a bank.

## Claims

1. A translucent article comprising a translucent substrate and at least two electrically conductive loops supported by the substrate, the loops being relatively oriented and shaped whereby when electric current is passed through the loops a magnetic field is generated which is capable of being detected by a hearing aid.

2. An article according to claim 1 wherein the shape and relative orientation of the loops are selected whereby the composite magnetic field has a maximum field strength at a desired location and in the vicinity of a region where the loops are adjacent each other.

3. An article according to claims 1 or 2 wherein the loops are located in a common plane on the substrate.

4. An article according to any one of claims 1 to 3 wherein the article comprises a window.

5. An article according to claim 4 wherein the window is composed of a single sheet of glass or plastics and the loops are carried on a surface of the sheet.

6. An article according to claim 4 wherein the window is composed of a laminate of glass and/or plastics sheets bonded together by one or more interlayers and the loops are carried on or in any selected layers of the laminate.

7. An article according to claim 4 wherein the window is a multiple glazed window having an interspace between opposed translucent sheets of the window and the loops are located in the interspace.

8. An article according to any foregoing claim wherein the loops are supported by a self-adhesive transparent plastics film.

9. An article according to any foregoing claim wherein one or more of the loops comprises a plurality of turns.

10. An article according to claim 9 wherein the turns are located in a common plane.

11. An article according to claim 9 wherein the turns are located in different parallel planes.

12. An article according to any foregoing claim wherein the turns are laterally spaced from each other.

13. An article according to any foregoing claim wherein the loops, either wholly or partially, share a common edge.

14. An article according to any foregoing claim wherein each loop has a respective pair of electrical connectors for connecting the respective loop to a source of electric current.

15. An article according to any one of claims 1 to 13 wherein the loops have a common pair of electrical connectors for connecting the loops to a source of electric current.

16. An article according to any foregoing claim wherein the loops each have a substantially rectangular plan.

17. An article according to any foregoing claim wherein each loop is formed of electrically conductive wire, tape, strip, frit, ink, cured resin, cured adhesive or film.

18. An article according to any foregoing claim which is a window for use in a booth for a teller position.

19. A booth for a teller position in a building incorporating a window according to claim 18.

20. An apparatus for generating a magnetic field for reception by a hearing aid, the apparatus comprising an article in the form of a window according to claim 18 or claim 19 in combination with a driving circuit for supplying an electric current at a selected frequency to the at least two loops.

21. An apparatus according to claim 20 further comprising electrial connection means for connecting the driving circuit to the at least two loops.

22. An apparatus according to claim 20 or claim 21 wherein the driving circuit is adapted to supply the electric current at a frequency of from 50 Hz to 20 kHz.

23. An apparatus according to any one of claims 20 to 22 wherein the apparatus is adapted to generate a magnetic field of from 0.05 to 0.2 A/m.

24. An apparatus according to any one of claims 20 to 23 wherein the driving circuit is integrated into the amplifier of a microphone amplification system including a microphone, an amplifier and a loud speaker and wherein the amplification system is adapted to generate a magnetic field and/oramplified sound in response to speech detected by microphone.

25. A booth for a teller position in a building incorporating an apparatus according to any one of claims 20 to 24.
